(19) Europäisches Patentamt
European Patent Office
Office européen des brevets

(11) Veröffentlichungsnummer: 0 019 217
A1

# (12) EUROPÄISCHE PATENTANMELDUNG

(21) Anmeldenummer: 80102524.8

(22) Anmeldetag: 08.05.80

(51) Int. Cl.³: C 08 L 69/00

(30) Priorität: 21.05.79 DE 2920451

(43) Veröffentlichungstag der Anmeldung:
26.11.80 Patentblatt 80/24

(84) Benannte Vertragsstaaten:
BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Idel, Karsten, Dr.
Scheiblerstrasse 81
D-4150 Krefeld(DE)

(72) Erfinder: Cohnen, Wolfgang, Dr.
Heymannstrasse 36
D-5090 Leverkusen(DE)

(72) Erfinder: Freitag, Dieter, Dr.
Hasenheide 10
D-4150 Krefeld-Traar(DE)

## (54) Verwendung von organischen Siliciumverbindungen in Kombination mit Oxetanverbindungen, Dioxanen oder Tetrahydrofuranen zum Stabilisieren und Aufhellen von phosphitfreien und borsäureesterfreien Polycarbonaten.

(57) Gegenstand der vorliegenden Erfindung ist die Verwendung von organischen Siliciumverbindungen in Kombination mit Oxetanverbindungen, Dioxanen oder Tetrahydrofuranen zum Stabilisieren und Aufhellen von phosphitfreien und borsäureesterfreien Polycarbonaten in Mengen von 0,01 bis 1,0 Gew.-%, vorzugsweise in Mengen von 0,1 bis 0,75 Gew.-%, bezogen auf Gesamtgewicht aus Polycarbonat und Stabilisatorkombination, an jeweiliger Stabilisatorkombination aus organischer Siliciumverbindung und einem der übrigen organischen Costabilisatoren.

EP 0 019 217 A1

Croydon Printing Company Ltd.

BAYER AKTIENGESELLSCHAFT
Zentralbereich
Patente, Marken und Lizenzen

5090 Leverkusen, Bayerwerk
PS/W/Kü
17. Mai 1979

Verwendung von organischen Siliciumverbindungen in Kombination mit Oxetanverbindungen, Dioxanen oder Tetrahydrofuranen zum Stabilisieren und Aufhellen von phosphitfreien und borsäureesterfreien Polycarbonaten

Gegenstand der vorliegenden Erfindung ist die Verwendung von organischen Siliciumverbindungen in Kombination mit Oxetanverbindungen, Dioxanen oder Tetrahydrofuranen zum Stabilisieren und Aufhellen von phosphitfreien und borsäureesterfreien Polycarbonaten in Mengen von 0,01 bis 1,0 Gew.-%, vorzugsweise in Mengen von 0,1 bis 0,75 Gew.-%, bezogen auf Gesamtgewicht aus Polycarbonat und Stabilisatorkombination, an jeweiliger Stabilisatorkombination aus organischer Siliciumverbindung und einem der übrigen organischen Costabilisatoren.



BAD ORIGINAL

Die Stabilisatorkombinationen bestehen aus 30 Gew.-% bis 90 Gew.-%, vorzugsweise aus 50 Gew.-% bis 90 Gew.-% aus der jeweiligen organischen Siliciumverbindung und aus 70 Gew.-% bis 10 Gew.-%, vorzugsweise 50 Gew.-% bis 10 Gew.-% aus einem der übrigen organischen Costabilisatoren.

Die zu stabilisierenden Polycarbonate haben einen Wassergehalt von weniger als 0,01 Gew.-% bezogen auf Gewicht Polycarbonatharz, sind insbesondere nach den bekannten Lösungsverfahren hergestellt und sind vorzugsweise frei von Pigmenten.

Gemäß DOS 27 26 662 werden Silane oder Epoxide als Costabilisatoren in speziellen phosphitstabilisierten Polycarbonaten eingesetzt.

Gemäß DOS 26 59 756 werden Siloxane und gegebenenfalls Epoxyverbindungen zur Stabilisierung von phosphitstabilisierten Polycarbonaten eingesetzt.

Gemäß DOS 27 41 064 werden Silanole zur Stabilisierung von phosphitstabilisierten und/oder epoxidstabilisierten pigmenthaltigen Polycarbonaten eingesetzt.

Gemäß DAS 21 40 207 werden oxetangruppenhaltige Phosphite zur Stabilisierung von Polycarbonaten eingesetzt.

Gemäß DOS 22 55 639 werden ebenfalls oxetangruppenhaltige Phosphite zum Stabilisieren von Polycarbonaten



BAD ORIGINAL

zugesetzt, wobei die Phosphite noch Tetrahydrofurylreste enthalten können.

Gemäß DOS 25 10 463 können Ester der Kieselsäure zusammen mit Oxetanverbindungen und/oder speziellen Dioxanverbindungen und/oder speziellen Tetrahydrofuranverbindungen zur Stabilisierung von phosphitstabilisierten Polycarbonaten eingesetzt werden (Siehe Seiten 4, 5 und 6 der DOS).

Gemäß der europäischen Patentanmeldung 78 101 260 (Le A 18 380-EP) können Ester der Kieselsäure zusammen mit Oxetanverbindungen und/oder speziellen Dioxanverbindungen und/oder speziellen Tetrahydrofuranverbindungen zur Stabilisierung von borsäureesterstabilisierten Polycarbonaten eingesetzt werden (Siehe Seiten 5, 15 und 18 der DOS).

Gemäß der DOS 26 58 849 werden Oxetanverbindungen gegebenenfalls zusammen mit Phosphiten zur Stabilisierung von Polycarbonaten eingesetzt.

Gemäß GB-PS 11 41 869 sind Silane als Umesterungskatalysatoren für die Polycarbonatherstellung nach dem Schmelzumesterungsverfahren geeignet, welche zugleich stabilisierend wirken und somit die mit manchen Umesterungskatalysatoren verursachten Verfärbungen und Trübungen des hergestellten Polycarbonats nicht bewirken.



BAD ORIGINAL

Die eingesetzten Silane enthalten maximal einen Alkoxy-Silan-Rest. Gemäß DE-OS 17 7o 329 und US-PS 3625 92o können derartige Silane auch zusammen mit Boraten als Umesterungskatalysatoren mit dem gleichen Ziel eingesetzt werden.

Aus diesen letztgenannten Literaturstellen läßt sich jedoch nicht ableiten, daß der Zusatz von organischen Siliciumverbindungen in Polycarbonaten, insbesondere zu solchen, die nach dem Lösungsverfahren hergestellt sind, außer einer stabilisierenden Wirkung gegen Abbau bei thermischer Belastung zusätzlich eine aufhellende Wirkung besitzen.

Im US-Patent 4 138 379 werden Silane gegebenenfalls in Kombination mit Phosphiten und/oder Epoxiden als Additive zur Erhöhung des Schmelzflusses und als Stabilisatoren gegen einen Wärme-oxidativen Abbau beansprucht. In sämtlichen Beispielen dieser Anmeldung wird jedoch zusätzlich ein Gemisch aus 1 Teil Diphenyl-octylphosphit und 2 Teilen 3,4-Epoxycyclohexylmethyl-3,4-epoxycyclohexancarboxylat zugefügt, so daß nicht gezeigt wird, ob die Silicumverbindungen alleine und ohne die z.B. für das Hydrolyseverhalten des Polycarbonats wenig vorteilhaften Phosphite eine ausreichend stabilisierende Wirkung besitzen. Darüber hinaus wird nur ein positiver Effekt nach der Verarbeitung und nicht nach Langzeittemperaturalterung beschrieben.

Es wurde nun gefunden, daß organische Siliciumverbindungen in Kombination mit Oxetanverbindungen, Dioxanen oder Tetrahydrofuranen zum Stabilisieren und Aufhellen von phosphitfreien und borsäureesterfreien, und insbesondere auch pigmentfreien Polycarbonaten geeignet sind.



BAD ORIGINAL

Im Vergleich zum unstabilisierten Polycarbonat zeigen die erfindungsgemäß stabilisierten aromatischen Polycarbonate eine deutlich höhere Lichttransparenz und Farbkonstanz sowohl direkt nach der thermoplastischen Verarbeitung als auch nach einer mehrere tausend Stunden dauernden Wärmealterung. Insbesondere nach der Wärmealterung zeigen sich die mit den erfindungsgemäßen Stabilisatomischungen stabilisierten Polycarbonate solchen mit Triorganophosphiten aufgrund der geringeren Farbveränderung überlegen.

Darüber hinaus beeinflußen die Stabilisatormischungen in keiner Weise die Hydrolysestabilität der aromatischen Polycarbonate, während Triorganophosphite die Hydrolysestabilität im allgemeinen beträchtlich verringern, insbesondere dann, wenn die Polycarbonatteile mit kochendem Wasser z.B. zur Reinigung oder Sterilisation behandelt werden.

Erfindungsgemäß geeignete organische Siliciumverbindungen sind solche der Formel (I)

$$(R_1)_a\text{-Si-}(OR_2)_b \qquad (I)$$

worin a + b = 4, b mindestens 1, vorzugsweise 3 oder 4 ist, $R_1$ H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und $R_2$ $C_1$-$C_{18}$-Alkyl, $C_2$-$C_{18}$-Alkenyl, $C_5$-$C_{10}$-Cycloalkyl oder $C_7$-$C_{24}$-Aralkyl sind.

Die Alkyl- bzw. Alkenyl-Reste $R_1$ und $R_2$ können linear oder verzweigt sein.



BAD ORIGINAL

Die C-Reste $R_1$ und $R_2$ können beliebige, nicht basische, bei der thermoplastischen Verarbeitung der Polycarbonate thermisch stabile und inerte Substituenten enthalten wie beispielsweise Halogenatome wie: Chlor oder Brom, $C_1$-$C_{18}$-Alkoxigruppen, $C_6$-$C_{24}$-Aryloxigruppen, heterocyclische Reste mit Sauerstoff, Schwefel und/oder nicht basischen Stickstoffatomen, Ketogruppen, Estergruppen, Nitrilgruppen, Ethergruppen und/oder Thioethergruppen.

Bevorzugte Reste $R_1$ sind z.B.

Methyl
Ethyl
Vinyl
Propyl
3-Chlorpropyl
3-Methacryloxypropyl
3-Glycidyloxypropyl
Butyl
Pentyl
Hexyl und
Cyclohexyl.

Bevorzugte Reste $R_2$ sind z.B.

Butyl
Pentyl
Hexyl
Octyl
Stearyl
Decyl
Cyclohexyl
Methyl-cyclohexyl
(3-Methyloxetanyl-3)-methyl
(3-Ethyloxetanyl-3)-methyl
(3-Amyloxetanyl-3)-methyl



BAD ORIGINAL

2-Methoxy-ethyl
3-Methoxy-propyl
3-Ethoxy-propyl
3-(Thiomethyl)-propyl
(5-Ethyl-1,3-dioxanyl-5)-methyl und
2,3-Epoxy-propyl

Zur Darstellung der Siliciumverbindungen der Formel 1 bieten sich hauptsächlich zwei Verfahren an:

1. Die Umsetzung von Siliciumhalogeniden mit Alkoholen nach dem Schema:

$$(R_1)_a\text{-Si-}Cl_b + b\ R_2OH \longrightarrow bHCl + (R_1)_a\text{-Si-}(OR_2)_b.$$

2. Die Umesterung von Kieselsäureestern niedriger Alkohole mit den entsprechenden Alkoholen unter Abdestillation der frei werdenden niedrigen Alkohole Ethanol, Methanol nach dem Schema:

$$(R_1)_a\text{-Si-}(OR')_b + b\ R_2OH \rightarrow b\ R'OH + (R_1)_a\text{-Si-}(OR_2)_b$$

$R' = CH_3,\ C_2H_5.$

Die Darstellung nach diesen Methoden ist z.B. beschrieben bei: D. Ridge u.M. Todd, J. Chem. Soc.1949, S. 2637-2640 oder V. Bažant, V. Chvalovsky', J. Rathousky': Organosilicon Compounds, <u>Bd. 1,</u> S. 51-61, Academic Press, New York 1965.

Die Darstellung von Epoxiden, Oxetanen und Tetrahydrofuranen ist z.B. in Houben Weyl "Methoden der organischen Chemie" Band VI, 3, Georg Thieme Verlag, Stuttgart 1965 auf den Seiten 366-434 (Epoxide), 488-508 (Oxetane) und 523-592 (Tetrahydrofurane) und in Houben Weyl "Methoden der organischen Chemie" Band VI, 4, Georg Thieme Verlag, Stuttgart 1966 auf den Seiten 411-430 (Dioxane), beschrieben.



BAD ORIGINAL

Als stabilisierend wirkende Siliciumverbindungen gemäß Formel 1 können z.B. Verwendung finden:

Tetrabutoxysilan
Tetrapentoxysilan
Tetrahexoxysilan
Tetraoctoxysilan
Tetradecoxysilan
Tetrastearoxysilan
Tetra-cyclohexoxysilan
Tetrakis- (methyl-cyclohexoxy)-silan
Methyl-tributoxysilan
Methyl-trihexoxysilan
Methyl-trioctoxysilan
Methyl-tridecoxysilan
Methyl-tristearoxysilan
Methyl-tri-cyclohexoxysilan
Methyl-tris-(methyl-cyclohexoxy)-silan
Vinyl-tributoxysilan
Vinyl-trihexoxysilan
Vinyl-trioctoxysilan
Vinyl-trihexoxysilan
Vinyl-tristearoxysilan
Vinyl-tricyclohexoxysilan
Vinyl-tris-(methyl-cyclohexoxy)-silan
Tributoxysilan
Trihexoxysilan
Trioctoxysilan
Tridecoxysilan



BAD ORIGINAL

Tetrakis- (2-oxyethyl-ethoxy)-silan
Methyl-tris-(2-oxyethyl-ethoxy)-silan
Vinyl-tris-(2-oxyethyl-ethoxy)-silan
Vinyl-tris-(2-methoxy-ethoxy)-silan
Methyl-tris-(2-methoxy-ethoxy)-silan
3-Chlorpropyl-triethoxysilan
3-Chlorpropyl-tributoxysilan
3-Chlorpropyl-trihexoxysilan
3-Chlorpropyl-trioctoxysilan
3-Glycidylpropoxy-triethoxysilan
3-Glycidylpropoxy-tributoxysilan
3-Glycidylpropoxy-trihexoxysilan
3-Glycidylpropoxy-trioctoxysilan
Iso-butyl-tributoxysilan
Iso-butyl-trioctoxysilan
Tetrakis- (2-methoxyethoxy)-silan
3-Methacryloxypropyl-trimethoxysilan
Tetrakis-[(3-methyloxetanyl-3)-methoxy]-silan
Tetrakis-[(3-ethyloxetanyl-3)-methoxy]-silan
Tetrakis-[(3-amyloxetanyl-3)-methoxy]-silan
Methyl-tris-[(3-methyloxetanyl-3)-methoxy]-silan
Methyl-[(3-ethyloxetanyl-3)-methoxy]-silan
Dimethyl-bis-[(3-methyloxetanyl-3)-methoxy]-silan
Dimethyl-bis-[(3-ethyloxetanyl-3)-methoxy]-silan
Tetrakis-[(5-ethyl-1,3-dioxanyl-5)-methoxy]-silan
Methyl-tris-[(5-ethyl-1,3-dioxanyl-5)-methoxy]-silan
Tetrakis-(2,3-epoxy-propoxy)-silan
Methyl-tris-(2,3-epoxy-propoxy)-silan

Erfindungsgemäß geeignete Oxetanverbindungen sind solche der Formel (2), worin

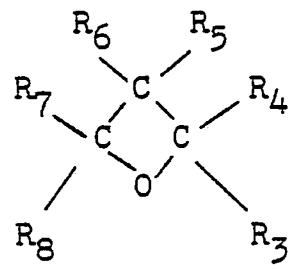

(2)

$R_3$, $R_4$, $R_5$, $R_6$, $R_7$, $R_8$ gleich oder verschieden sein können und H, $C_1$ - $C_{18}$-Alkyl, $C_5$-$C_{12}$-Cycloalkyl, $C_6$-$C_{15}$-Aryl, $C_7$-$C_{15}$-Aralkyl und Alkaryl, $C_1$-$C_{18}$-Hydroxyalkyl, $C_2$-$C_{18}$-Alkoxyalkyl, ($C_6$-$C_{15}$-Aryl)-oxymethyl, ($C_7$-$C_{15}$-Aralkyl)-oxymethyl oder Monoacyloxymethyl, wobei ein Monoacylrest einer ein- oder mehrbasischen Carbonsäure geeignet ist.

Besonders bevorzugt sind solche Oxetane, bei denen

$R_3$, $R_4$, $R_7$, $R_8$ gleich Wasserstoff sind,
$R_5$ die obengenannte Bedeutung hat und
$R_6$ einen Rest $-CH_2-O-X$ darstellt,

wobei X gleich H, $C_1$ - $C_{17}$-Alkyl, $C_6$-$C_{15}$-Aryl, $C_7$-$C_{15}$-Aralkyl oder Alkaryl oder ein Monoacylrest einer ein- oder mehrbasischen Carbonsäure ist.



BAD ORIGINAL

Erfindungsgemäß geeignete Tetrahydrofurane sind solche der Formel (3),

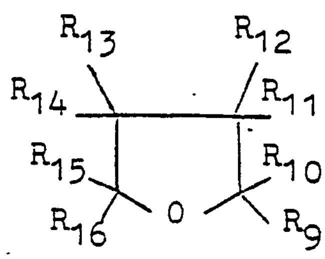

(3)

worin die Reste $R_9$ bis $R_{16}$ die gleiche Bedeutung wie die Reste $R_3$ bis $R_8$ in Formel (2) haben.

Darüberhinaus kann einer der Reste $R_9$ - $R_{16}$ eine einfache Bindung zu einem entsprechenden weiten Rest der Formel (3) darstellen.

Außerdem können $R_9$ bis $R_{16}$ Reste der Formeln $-CH_2O-X$ und/oder $-COO-Y$ darstellen, wobei X die gemäß Formel (2) definierte Bedeutung hat und Y einem der Reste $R_3$ bis $R_8$ entspricht.

Darüberhinaus können jeweils zwei der Reste $R_9$ bis $R_{16}$, die $\alpha$,ß-ständig zueinander sind, durch eine Epoxy-Brücke ersetzt werden, sowie jeweils zwei der Reste $R_9$ bis $R_{16}$, die $\alpha$,$\alpha$-ständig zueinander sind, durch ein $C_4$ bis $C_6$-Alkylen ersetzt werden.



BAD ORIGINAL

Erfindungsgemäß geeignete Dioxane sind solche der Formeln (4) und (5), worin

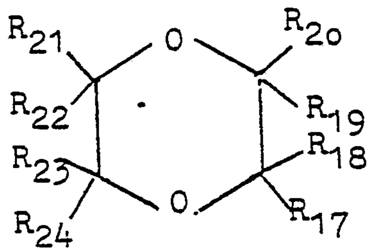

(4)

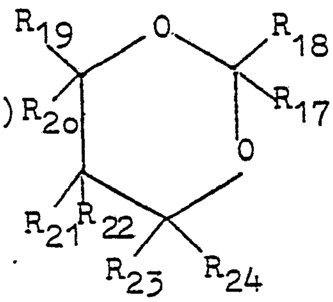

(5)

die Reste $R_{17}$ bis $R_{24}$ die gleiche Bedeutung wie die Reste $R_3$ bis $R_8$ in Formel (2) haben.

Darüberhinaus kann einer der Reste $R_{17}$ bis $R_{24}$ eine einfache Bindung zu einem entsprechenden zweiten Rest der Formeln (4) und (5) darstellen; außerdem können $R_{17}$ bis $R_{24}$ Reste der Formeln $-CH_2O$ X und/oder COOY darstellen, wobei X und Y entsprechend Formel (3) definiert sind.

Beispiele für die erfindungsgemäß geeigneten Oxetane, Tetrahydrofurane und Dioxane sind:

3-Ethyl-oxetanyl-(3)-carbonsäure-ethylester,
3-Ethyl-oxetanyl-(3)-carbonsäure-[3-ethyl-oxetanyl-(3)]-methylester,
3-Amyl-oxetanyl-(3)-carbonsäure-[3-amyl-oxetanyl-(3)]-methylester,
3-Hydroxymethyl-3-ethyloxetan,
3-Phenoxymethyl-3-ethyloxetan,
3-Phenoxymethyl-3-amyloxetan,
[3-Ethyl-oxetanyl-(3)]-methylbenzoat,
[3-Ethyl-oxetanyl-(3)]-methylstearat,
Bis-([3-ethyl-oxetanyl-(3)]-methyl)-phthalat,
Bis-([3-ethyl-oxetanyl-(3)]-methyl)-carbonat,
Bis-([3-ethyl-oxetanyl-(3)]-methyl)-adipat,
2-Hydroxymethyl-tetrahydrofuran,
2-(3-Hydroxypropyl)-tetrahydrofuran,
2-(5-Hydroxypentan)-tetrahydrofuran,
2,5-Bis-[3-hydroxypropyl]-tetrahydrofuran,
2,5-Bis-(hydroxymethyl)-tetrahydrofuran,

sowie deren Ester, z.B. der Benzoesäure, Stearinsäure, Ölsäure, Adipinsäure, Phthalsäure, Trimesinsäure, Kohlensäure etc.

1-Phenyl-3-tetrahydrofuranyl-(2)-propan,
2,2,5,5-Tetramethyl-tetrahydrofuran,
2,2,5,5-Bis-(pentamethylen)-tetrahydrofuran,
2,2,5,5-Tetraphenyl-tetrahydrofuran,
Bis-(tetrahydrofuranyl-3),
3,4-Epoxy-tetrahydrofuran,
3,3-Dicarbethoxy-tetrahydrofuran,
2,5-Diethoxy-tetrahydrofuran,
2,5-Bis-[1,1-dimethoxy-ethyl]-tetrahydrofuran

2,5-Diethoxy-1,4-dioxan,
2,2,6,6-Tetramethyl-1,4-dioxan,
2-Benzoyloxy-1,4-dioxan,
2-Hydroxymethyl-1,4-dioxan,
2-[3-Hydroxypropyl]-1,4-dioxan,
2-Hydroxymethyl-1,3-dioxan,
5,5-Ethyl-hydroxymethyl-1,3-dioxan,
5,5-Amyl-hydroxymethyl-1,3-dioxan,
5,5-Methyl-hydroxymethyl-1,3-dioxan,

sowie Ester dieser Hydroxyalkyl-dioxane mit z. B. Benzoesäure, Stearinsäure, Ölsäure, Adipinsäure, Phthalsäure, Trimesinsäure, Kohlensäure etc.

Die Einarbeitung der erfindungsgemäßen Stabilisatormischungen in die aromatischen Polycarbonate kann erfolgen, indem die Stabilisatormischungen entweder direkt dem geschmolzenen Polycarbonat oder als Lösung in einem niedrigsiedenden Lösungsmittel der Polycarbonatlösung zudosiert werden. Auch durch Tränkung des gepulverten oder granulierten Polycarbonats mit den pulverförmigen oder flüssigen Stabilisatormischungen in einer geeigneten Mischapparatur durch sogenanntes Auftrudeln und anschließende thermoplastische Verarbeitung nach bekannten Techniken lassen sich die stabilisierten, aromatischen Polycarbonate herstellen.

Unter aromatischen Polycarbonaten im Sinne dieser Erfindung werden Homopolycarbonate und Copolycarbonate verstanden, denen z.B. ein oder mehrere der folgenden Diphenole zugrunde liegen:



BAD ORIGINAL

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole

sowie deren kernalkylierte und kernhalogenierte Verbindungen. Diese und weitere geeignete Diphenole sind z.B. in den US-Patentschriften 3 028 365, 2 999 835, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der franz. Patentschrift 1 561 518 und in der Monographie "H. Schnell, Chemistry and Physics of Polycarbonates, Intersciene Publishers, New York, 1964" beschrieben.

Bevorzugte Diphenole sind z.B.:

4,4'-Dihydroxydiphenyl
2,2-Bis-(4-hydroxyphenyl)-propan
2,4-Bis-(4-hydroxyphenyl)-2-methylbutan

1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,3-dimethyl-4-hydroxyphenyl)-methan
2,2-Bis-(3,5-dimethyl-4-hydroxyphenyl)-propan
Bis-(3,5-Dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, so z.B. nach dem Schmelzumesterungsverfahren aus Bisphenol und Diphenylcarbonat und nach den bekannten Lösungsverfahren aus Bisphenolen und Phosgen, wie es in der obengenannten Literatur beschrieben ist. Als Lösungsverfahren sind sowohl das in homogener Phase, das sogenannte Pyridinverfahren, als auch das in heterogener Phase, das sogenannte Zweiphasengrenzflächenverfahren geeignet.

Polycarbonate, die nach den bekannten Lösungsverfahren, insbesondere nach dem Zweiphasengrenzflächenverfahren hergestellt worden sind, sind zur Stabilisierung gemäß vorliegender Erfindung besonders geeignet.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, z.B. solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 25 00 092 (Le A 16 142) beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-Bis-(4-hydroxyphenyl)-cyclohexyl]-propan, 2,4-Bis-(4-hydroxyphenyl-isopropyl)-phenol, 2,6-Bis-(2'-hydroxy-5'-methyl-benzyl)-4-methylphenol, 2-(4-hydroxyphenyl)-2-(2,4-dihydroxyphenyl)-



BAD ORIGINAL

propan und 1,4-Bis-(4,4"-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben, ermittelt durch Messungen der rel. Viskosität in $CH_2Cl_2$ bei 25°C und einer Konzentration von 0,5 Gew.-%.

Im Falle der Polycarbonatmischungen können den hochmolekularen Polycarbonaten mit $\bar{M}_w$ von 10 000 bis 200 000 auch kleine Anteile niedermolekularer Polycarbonate, z.B. mit einem mittleren Polymerisationsgrad von 2 - 20, zugemischt sein.

Wie üblich können den aromatischen Polycarbonaten weitere Zusatzstoffe vor, während oder nach deren Herstellungsprozeß zugemischt werden, wobei sich die erfindungsgemäßen Stabilisatormischungen durch hervorragende Verträglichkeit mit anderen Additiven wie z.B. UV-Absorbern oder Flammschutzmitteln auszeichnen.

Als weitere Zusatzstoffe seien beispielsweise erwähnt: Entformungsmittel, Farbstoffe, UV-Absorber, anorganische Pigmente, Füllstoffe wie Glasfasern, Graphit, Asbest, Metallpulver etc.

Im folgenden wird die Erfindung durch Beispiele näher beschrieben, ohne dadurch eingegrenzt zu sein.



BAD ORIGINAL

Beispiele

Als Basismaterial für die Untersuchungen wurde ein Polycarbonat auf Basis Bisphenol A mit einer Lösungsviskosität von $\eta_{rel}$ = 1,285 (0,5 g Polycarbonat in 100 ml Methylenchlorid) gewählt, das frei von stabilisierenden Additiven war und das nach dem Zweiphasengrenzflächenverfahren aus 2,2-Bis-(4-hydroxyphenyl)-propan und Phosgen in bekannter Weise hergestellt worden war.

In dieses Polycarbonat wurden verschiedene Stabilisatormischungen eingearbeitet und die auf diese Weise stabilisierten Polycarbonate im Vergleich zum Phosphitstabilisierten Material bezüglich der Lichtdurchläßigkeit direkt nach Verarbeitung und nach 1500 Std. Wärmealterung bei 140°C sowie der Hydrolysefestigkeit im Kochtest untersucht. Die Einarbeitung erfolgt durch Auftrudeln des jeweiligen Stabilisators auf das Polycarbonat und nachfolgende thermoplastische Verarbeitung des so beladenen Polycarbonats z.B. im Zweiwellenextruder. Die dabei erhaltenen Granulate wurden in einem Spritzgußautomaten zu Normprüfstäben verarbeitet.

Die Lichtdurchlässigkeit (Lichttransmission) dieser Normprüfstäbe wurde nach DIN 5033 und DIN 4646 bei 420 nm am spritzfrischem Material gemessen. Die gleiche Messung wurde nach 1500 Std. Wärmealterung bei 140°C wiederholt und die Prüfstäbe farblich gemustert. Die Wärmealterung wird unter Luftatmosphäre durchgeführt. Beim Hydrolysetest wurden die Prüfstäbe in bei Atmosphärendruck kochendem Wasser behandelt und nach jeweils 100 Std. Kochzeit abgemustert.

Folgende Stabilisatoren oder Stabilisatormischungen wurden in Polycarbonat eingearbeitet und ihre stabilisierende Wirkung überprüft:

| | |
|---|---|
| I | Tris-[(3-ethyloxetanyl-3)-methyl]-phosphit |
| II | 310 Gew.-Teile Triphenylphosphit (1 Mol)/<br>426 Gew.-Teile Cyclohexan-1,2-dicarbonsäure-bis-epoxypropylester (1,5 Mol) [Mischung Phosphit/Epoxid] |
| III | Tetraoctoxysilan |
| IV | 1 Gew.-Teil Tetraoctoxysilan<br>1 Gew.-Teil 3-Ethyl-3-hydroxymethyl-oxetan |
| V | 2 Gew.-Teile Tetraoctoxysilan<br>1 Gew.-Teil 3-Ethyl-3-hydroxymethyl-oxetan |
| VI | 1 Gew.-Teil Tetrakis-[(3-ethyloxetanyl-3)-methoxy]-silan<br>1 Gew.-Teil Bis-[(3-ethyloxetanyl-3)-methyl]-carbonat |
| VII | 1 Gew.-Teil Tetraoctoxysilan<br>1 Gew.-Teil 2,2,6,6-Tetramethyl-1,4-dioxan |
| VIII | 1 Gew.-Teil Tetraoctoxysilan<br>1 Gew.-Teil 3,4-Epoxy-tetrahydrofuran |
| IX | 1 Gew.-Teil Tetraoctoxysilan<br>1 Gew.-Teil Tetrakis-[(5-ethyl-1,3-dioxanyl-5)-methyl]-carbonat. |

In Tabelle 1 sind die Ergebnisse der Lichttransmissionsmessung von I-IX direkt nach Verarbeitung und nach 1500 Std. Wärmealterung bei 140°C sowie die farbliche



BAD ORIGINAL

Abmusterung nach Wärmealterung dargestellt.

Die Primäraufhellung der erfindungsgemäßen Stabilisatormischungen liegt in der Größenordnung der mit Phosphiten bzw. deren Mischungen z.B. mit Epoxiden erhaltenen Werte.

Die Überlegenheit der Stabilisatormischungen gegenüber Phosphiten und deren Mischungen zeigt sich deutlich durch eine bessere Lichtdurchläßigkeit und Farbe nach der Wärmealterung sowie durch eine im Vergleich zum unstabilisierten Polycarbonat gleich gute Hydrolysestabilität, während phosphitstabilisiertes Polycarbonat bereits nach der Hälfte der Kochzeit (700 Std.) einen gravierenden Molekulargewichtsabbau und Verlust der mechanischen Eigenschaften erleidet (siehe Tabelle 2).



BAD ORIGINAL

Tabelle 1

| Polycarbonat ($\eta$ rel 1,285) + Gew. % | Stabilisator | Lichttransmission bei 420 nm (spritzfrische Probe) | Lichttransmission bei 420 nm nach Wärmealterung 1500 Std. 140°C | Farbe nach Wärmealterung 1500 Std. 140°C |
|---|---|---|---|---|
| 0,1 | I | 0,850 | 0,490 | bräunlich |
| 0,1 | II | 0,840 | 0,700 | gelblich |
| 0,1 | III | 0,850 | 0,790 | fast farblos |
| 0,1 | IV | 0,850 | 0,780 | " " |
| 0,1 | V | 0,855 | 0,785 | " " |
| 0,1 | VI | 0,855 | 0,790 | " " |
| 0,1 | VII | 0,845 | 0,785 | |
| 0,1 | VIII | 0,855 | 0,795 | " " |
| 0,1 | IX | 0,855 | 0,800 | " " |

Tabelle 2

| Kochzeit (Std.) 0-Wert | Polycarbonat ohne Stabilisator $\eta_{rel}$ | $a_n$ | Polycarbonat mit 0,1 Gew.-% Tris-/‾(3-ethyl-oxetanyl-3)-methyl_7-phosphit $\eta_{rel}$ | $a_n$ | Polycarbonat mit 1 Gew.-Teil Tetraoctoxysilan 1 Gew.-Teil Tetrakis-/‾(5-ethyl-1,3-dioxanyl-5)-methyl_7-carbonat $\eta_{rel}$ | $a_n$ |
|---|---|---|---|---|---|---|
| | 1,289 | n.gebr. | 1,289 | n.gebr. | 1,290 | n.gebr. |
| 100 | 1,285 | n.gebr. | 1,259 | 9x n.gebr.<br>1x 90,9 | 1,287 | n.gebr. |
| 200 | 1,284 | n.gebr. | 1,160 | 4x n.gebr.<br>6x 16,2 | 1,283 | n.gebr. |
| 300 | 1,275 | n.gebr. | 1,104 | 4,9 | 1,277 | n.gebr. |
| 400 | 1,274 | 9x n.gebr.<br>1x 16,6 | 1,171 | 1,8 | 1,274 | n.gebr. |
| 500 | 1,269 | 44,4 | 1,155 | 1,0 | 1,266 | 8x n.gebr.<br>2x 49,8 |
| 700 | 1,261 | 3x n.gebr.<br>7x 46,0 | 1,117 | 0,8 | 1,259 | 4x n.gebr.<br>6x 46,1 |
| 1000 | 1,251 | 2x n.gebr.<br>8x 49,7 | - | - | 1,250 | 4x n.gebr.<br>6x 45,6 |
| 1250 | 1,242 | 1x n.gebr.<br>9x 11,1 | - | - | 1,244 | 5x n.gebr.<br>5x 38,7 |
| 1500 | 1,237 | 14,2 | - | - | 1,238 | 33,2 |

$\eta_{rel}$ = Relative Lösungsviskosität (0,5 g in 100 ml Methylenchlorid)
$a_n$ = Schlagzähigkeit ($kJ/m^2$)
n.gebr. = $a_n$ nicht gebrochen

Patentansprüche

1) Verwendung von organischen Siliciumverbindungen in Kombination mit Oxetanverbindungen, Dioxanen oder Tetrahydrofuranen zum Stabilisieren und Aufhellen von phosphitfreien und borsäureesterfreien Polycarbonaten in Mengen von 0,01 bis 1 Gew.-%, bezogen auf Gesamtgewicht aus Polycarbonat und Stabilisatorkombination aus organischer Siliciumverbindung und Oxetanverbindung, Dioxan oder Tetrahydrofuran.

2) Verwendung der Stabilisatorkombination gemäß Anspruch 1 in Mengen von 0,1 bis 0,75 Gew.-%.

3) Verwendung von organischen Siliciumverbindungen gemäß Ansprüchen 1 und 2 zur Stabilisierung und Aufhellung von Polycarbonaten, die nach den bekannten Lösungsverfahren hergestellt sind.

4) Verwendung der Stabilisatorkombination gemäß Ansprüche 1 bis 3 zum Stabilisieren und Aufhellen von pigmentfreien Polycarbonaten.

0019217

Europäisches Patentamt

# EUROPÄISCHER RECHERCHENBERICHT

Nummer der Anmeldung

EP 80 10 2524

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| D | GB - A - 1 141 869 (INSTYTUT TWORZYW SZTUCZNYCH)<br>* Ansprüche 1-6 *<br>-- | 1-4 | C 08 L 69/00 |
| D | US - A - 4 138 379 (S.W. SCOTT, H.A. VAUGHN)<br>* Anspruch 1; Seite 1, Spalte 2, Zeilen 6-35 *<br>-- | 1-4 | |
| D | DE - A - 2 658 849 (GENERAL ELECTRIC)<br>* Ansprüche 1-4 *<br>---- | 1-4 | RECHERCHIERTE SACHGEBIETE (Int. Cl. 3)<br>C 08 L 69/00<br>C 08 K 5/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 29-08-1980 | DECOCKER |